Europäisches Patentamt

**European Patent Office**

**Office européen des brevets**

(19)

(11) Veröffentlichungsnummer: **0 111 732**
**B1**

(12) **EUROPÄISCHE PATENTSCHRIFT**

(45) Veröffentlichungstag der Patentschrift:
14.01.87

(51) Int. Cl.⁴: **B 01 D 11/02**

(21) Anmeldenummer: **83111208.1**

(22) Anmeldetag: **10.11.83**

(54) **Verfahren zur Gewinnung von Rohstoffen aus Herbstlaub, deren Verwendung sowie eine Vorrichtung zur Durchführung des Verfahrens.**

(30) Priorität: **23.11.82 DE 3243282**

(43) Veröffentlichungstag der Anmeldung:
**27.06.84 Patentblatt 84/26**

(45) Bekanntmachung des Hinweises auf die Patenterteilung:
**14.01.87 Patentblatt 87/3**

(84) Benannte Vertragsstaaten:
**Ψ BE CH FR GB LI NL SE**

(56) Entgegenhaltungen:
**DE-A-1 619 810**
**DE-B-2 436 130**
**DE-C-952 571**

**CHEMICAL ABSTRACTS, Band 69, Nr. 3, 15. Juli 1968 Columbus, Ohio, USA, H.G.C. KING et al. "The effects of drying and aging tree leaves on the ability of their aqueous extracts to dissolve ferric oxide", Seite 836, Spalte 2, Abstract Nr. 8935d**

(73) Patentinhaber: **Müller, Dietrich, Dr., Handelmannweg 1, D-2000 Hamburg 52 (DE)**

(72) Erfinder: **Müller, Dietrich, Dr., Handelmannweg 1, D-2000 Hamburg 52 (DE)**

(74) Vertreter: **UEXKÜLL & STOLBERG Patentanwälte, Beselerstrasse 4, D-2000 Hamburg 52 (DE)**

EP 0 111 732 B1

# 0 111 732

**Beschreibung**

Die Erfindung betrifft ein Verfahren zur Gewinnung von Rohstoffen aus Herbstlaub, deren Verwendung sowie eine Vorrichtung zur Durchführung des Verfahrens.

Es ist bekannt, grüne oder gelbe Blätter von insbesondere zweckgezüchteten Pflanzen vom Stamm zu pflücken oder zu ernten und nach Trocknung und/oder Fermentation zur Gewinnung von Inhaltsstoffen zu extrahieren.

So ist beispielsweise aus der DE-OS 23 05 803 ein Verfahren zur Extraktion eines Feststoffes mit einem Lösungsmittel oder einem heißen Lösungsmittelgemisch bekannt, bei dem die Feststoffe einmal oder mehrmals extrahiert und die extrahierten Verbindungen anschließend aus der Lösung isoliert werden. Ferner ist es aus J.Soil. Sci. 19 (1), 67-76 (1968) bekannt, zur Feststellung der Löslichkeit von Eisen(III)-oxid im Hinblick auf die Podzolidierung die Auswirkung der Trocknung und Alterung gepflückter und gefallener Eichen-, Birken- und Lärchen-Blätter bzw. Nadeln auf die Fähigkeit deren Wasserextrakte zur Lösung solcher Eisen(III)oxide zu untersuchen. Dabei wurde weder eine Gruppentrennung der Blattinhaltstoffe noch die Gewinnung von Rohstoffen angesprochen. Bei einem weiteren Verfahren gemäß DE-OS 16 19 810 wird zur Gewinnung von Inhaltsstoffen aus beispielsweise Heilpflanzen Dimethylsulfoxyd als Extraktionsmittel verwendet, und zwar entweder allein oder im Gemisch mit sowohl Wasser oder wässrigen Lösungen als auch organischen Lösungsmitteln, wobei trockene oder frische Heilpflanzen eingesetzt werden bzw. durch Extraktion pflanzlicher Produkte ätherische Öle oder Gewürzauszüge oder Balsame erhalten werden. Letztlich ist es allgemein üblich, im Interesse einer möglichst vollständigen Extraktion den Feststoff zuvor zu zerkleinern oder zu pulverisieren; (Organikum, 2. Aufl. (1972) S. 65-67).

Die Vorstellung, daß man auf ähnliche Weise Herbstlaub zur Gewinnung von Blattinhaltsstoffen analog einsetzen kann, kam deswegen nicht auf, weil allgemein angenommen wurde, daß die Pflanze ihre Blattnährstoffe vor dem Herbstabwurf der Blätter in Zweige und Stamm ableitet, und die gefallenen Blätter daher an solchen Blattnährstoffen weitgehend verarmt sind. Aus diesem Grunde wurde gefallenes Herbstlaub bislang verbrannt, in geringen Mengen kompostiert oder auf andere Weise beseitigt. Die Beseitigung von Herbstlaub ist insbesondere in den Städten ein erhebliches Problem, weil das Herbstlaub zusammengekehrt und mit Müllfahrzeugen städtischer Dienste auf abgelegene Deponien gefahren oder äußerst aufwendig Kompostieranlagen zugeführt werden muß.

Die Erfindung hat sich die Aufgabe gestellt, ein Verfahren zur Gewinnung von Rohstoffen aus Herbstlaub und ferner eine für dieses Verfahren geeignete Vorrichtung vorzuschlagen, um damit einmal wertvolle chemische Rohstoffe zu erhalten, die entweder aus den Extrakten oder als Brennstoffe aus den Rückständen erhalten werden können.

Die Erfindung geht aus von einem Verfahren zur Gewinnung von Rohstoffen aus pflanzlichen Feststoffen durch ein- oder mehrstufige Extraktion mit einem oder mehreren Lösungsmitteln und Isolierung der Extrakte und des Rückstandes, wobei zur Lösung der obigen Aufgabe ein Verfahren vorgeschlagen wird, daß dadurch gekennzeichnet ist, daß man als pflanzliche Feststoffe zerkleinertes Herbstlaub und als Lösungsmittel solche mit einer Dielektrizitätskonstante $\varepsilon < 30$ (Lösungsmittelgruppe A) bzw. mit $\varepsilon = 30$ bis 80 (Lösungsmittelgruppe B) bzw. mit $\varepsilon > 80$ (Lösungsmittelgruppe C) einsetzt.

Überraschenderweise hat sich nämlich gezeigt, daß gefallenes Herbstlaub wertvolle und zum Teil neuartige chemische Rohstoffe in einem Anteil von etwa 1/3 seines Trockengewichtes enthält, während 2/3 des Trockengewichtes in Form eines nach der Extraktion anfallenden Rückstandes als Brennstoff isoliert werden kann, der ein schwefelfreies umweltfreundliches Abgas liefert, praktisch aschefrei ist, wenig Feuchtigkeit führt und ein relativ hohen Heizwert von etwa 20930 kJ /kg Trockengewicht Rückstand ergibt.

Bei dem erfindungsgemäßen Verfahren wird mit Lösungsmittelgruppen unterschiedlicher Polarität extrahiert, um die Rohstoffe in gewünschter Selektivität für die jeweiligen chemischen Vorerzeugnisse zu gewinnen.

Bei einer mehrstufigen Extraktion des Verfahrens, kann man die verschiedenen Lösungsmittelgruppen unterschiedlicher Dielektrizitätskonstanten nacheinander verwenden, wobei man bei einer beispielsweise dreistufigen Extraktion mit Lösungsmitteln einer Lösungsmittelgruppe mit einer niedrigeren Dielektrizitätskonstante beginnt und stufenweisen jeweils die Extraktion mit Lösungsmitteln einer Lösungsmittelgruppe höherer Dielektrizitätskonstanten fortsetzt. Bei einem derartigen mehrstufigen Extraktionsverfahren werden in jeder Stufe verschiedene Produkte erhalten.

Bei Verwendung von Lösungsmitteln mit einer Dielektrizitätskonstante von $\varepsilon = \; < 30$ (Lösungsmittelgruppe A) erhält man 4 bis 10 Gew.% Wachse, Harze, ätherische Öle und Alkaloide. Diese lassen sich insbesondere zur Herstellung von Geruchs- und Geschmacksstoffen für Kosmetika, Pharmaka und Pflegemittel verwenden.

Durch Extraktion mit Lösungsmitteln mit einer Dielektrizitätskonstante von $\varepsilon = 30 - 80$ (Lösungsmittelgruppe B), erhält man 10 bis 20 Gew.% Kohlehydrate, Proteine, Farb- und Gerbstoffe, organische Basen, Säuren oder Salze, die z.B. zur Herstellung von alkoholischen oder nicht-alkoholischen Röstgetränken, von Nähr- oder Futtermitteln und auch als Gerbmittel, Düngemittel, Tinten oder Kleber eingesetzt werden können.

Durch Einsatz von Lösungsmitteln, deren Dielektrizitätskonstanten an der Grenze der hier angegebenen Bereiche liegen und durch Lösungsmittelgemische einschließlich solcher, die azeotrop übergehen, lassen sich die anfallenden Rohstoffe mit den angegebenen Lösungsmittelgruppen auch zusammen gewinnen, so beispielsweise A + B zusammen sowie C getrennt anfallend, bzw. A gesondert und B + C zusammen anfallend. Ebenso kann man ein Lösungsmittel der Lösungsmittelgruppe B, wie z.B. Wasser zur losenden

2

Extraktion einsetzen und dessen übergehenden Dampf in der zweiten Stufe mit einem Lösungsmittel der Lösungsmittelgruppe A extrahieren. Hierdurch kann das Verfahren hinsichtlich der gewünschten Endprodukte flexibel durchgeführt werden.

Bei Verwendung von Lösungsmittel mit einer Dielektrizitätskonstante von $\varepsilon = >80$ (Lösungsmittelgruppe C), erhält man 10 bis 20 Gew.% Pektine und Pentosane, die zur Herstellung von Gelier-, Binde- oder Füllstoffen verwendet werden können.

Insbesondere ließ sich durch Lösungsmittel der Gruppe A und B eine ganze Reihe neuer Aromen isolieren, die in Duft- und Geschmacksstoffen verwendbar sind, wobei die Geruchsaromen aus den gefallenen Herbstblättern verschiedener einheimischer Baumarten in der folgenden Tabelle I aufgeführt sind.

Tabelle I

### Tabelle I

| Art | Aroma in Richtung |
| --- | --- |
| Ahorn | Rosmarin/Orange |
| Apfel | Kamille/Sandelholz |
| Birke | Sandelholz/Salbei |
| Birne | Jasmin/Weihrauch |
| Eiche | Ysop/Rosmarin |
| Kastanie | Jasmin/Ysop |
| Lärche | Myrrhe/Weihrauch |
| Linde | Melisse/Heu |
| Platane | Fenchel/Salbei |
| Rotbuche | Patchouli/Eukalyptus |
| Trompetenbaum | Fenchel/Ysop |
| Weißbuche | Eukalyptus/Wacholder |

Die Geschmacksaromen stehen insgesamt dem Kakao und Kaffee näher, jeweils artspezifisch, in Richtung fruchtig/nussig.

Ferner wurde unerwarteterweise festgestellt, daß man weitere Inhaltsstoffe gewinnen kann, wenn man den trocknen Rückstand nach Extraktion längere Zeit auf Temperaturen über 80°C, z.B. bis 240°C oder höher erhitzt und danach die Extraktion wiederholt; hierbei erhält man eine nochmalige Ausbeute an Inhaltsstoffen in einer Größenordnung von etwa 20 %. Dieses beruht vermutlich darauf daß im Blattgut zunächst nicht-extrahierbare Ausgangsstoffe vorhanden sind, die erst durch eine Wärmebehandlung weitere extrahierbare Stoffe bilden.

Die Erwärmung des Rückstands mit nachfolgender Extraktion kann mehrmals hintereinander durchgeführt werden, wobei man zusätzlich zu einer Ausbeutenerhöhung auch zum Teil andersartige Produkte gewinnen kann. Die hierbei verwendeten Lösungsmittel oder -gruppen können gleich oder verschieden sein.

Die Erfindung betrifft ferner eine zur Durchführung des Verfahrens bei Verwendung von zwei verschiedenen hochsiedenden Lösungsmitteln oder Lösungsmittelgruppen geeignete Vorrichtung mit einem heizbaren Gefäß und einem in diesem befindlichen Extraktionskolben mit aufgesetztem Kühler, die gemäß Anspruch 6 ausgebildet ist.

Im folgenden soll die Erfindung anhand von Zeichnungen näher erläutert werden; es zeigen:

Fig.1: ein Fließschema des erfindungsgemäßen Verfahrens,

Fig.2: ein Schnitt durch eine Vorrichtung zur Durchführung des Verfahrens unter Verwendung einer Doppeldestillation.

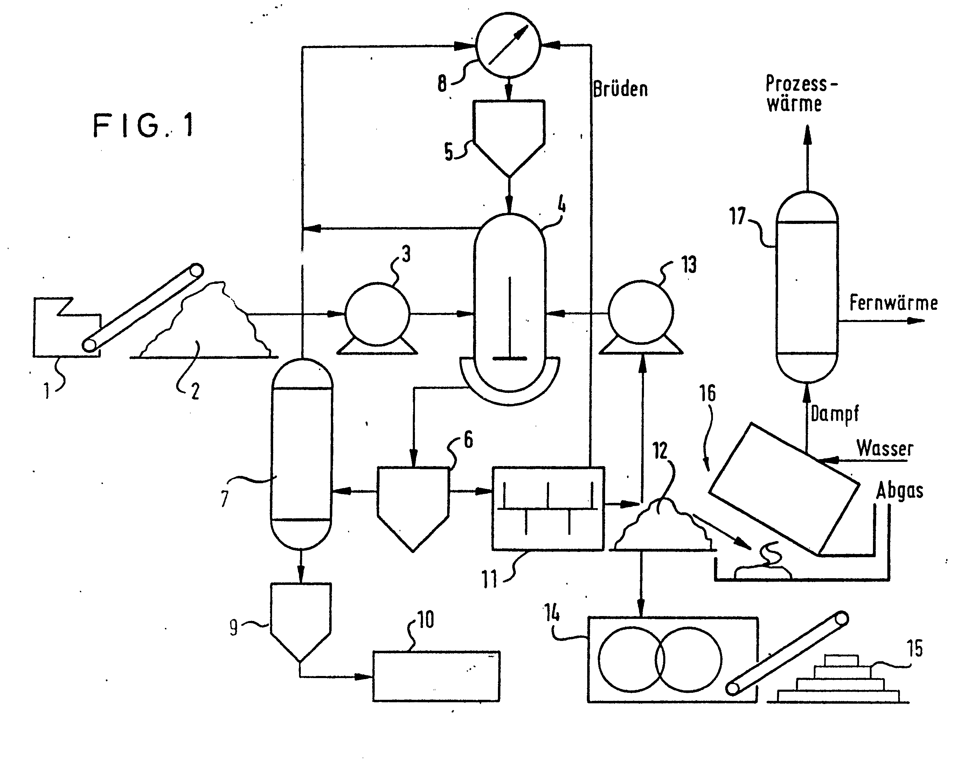

Nach dem in Figur 1 gezeigten Fließbild wird das gesammelte Herbstlaub in einer Mühle 1 bis zu einer Volumenverminderung von etwa 20 bis 30: 1 zermahlen und dann auf ein Lager 2 gegeben. Durch eine pneumatische Pumpe 3 wird das Material in einen Extraktor 4 geführt, der aus einem Behälter 5 mit Lösungsmittel versorgt wird. Nach der Extraktion werden in einer Zentrifuge 6 Lösungsmittel und Rückstand getrennt, wobei die flüssige Phase aus der Zentrifuge 6 dem Verdampfer 7 zugeführt und dort eingedickt bzw.

getrocknet wird. Das verdampfte zurückgewonnene Lösungsmittel gelangt über den Kühler 8 in den Behälter 5 zurück. Ferner ist eine Verdampfung noch im Extraktor 4 ebenfalls über den Kühler 8 vorgesehen. Das abgedampfte Extraktionsgut gelangt über einen Behälter 9 in eine Abfüllungsvorrichtung 10 und kann hier verpackt werden.

Die feste Phase aus der Zentrifuge 6 wird in einem Trockner 11 getrocknet, wobei die Lösungsmittelbrüden über einen Kühler 8 in den Behälter 5 gelangen. Der getrocknete Rückstand wird einem Zwischenlager 12 zugeführt. Von hier aus kann dieser Rückstand für weitere Extraktionsstufen über eine pneumatische Pumpe 13 wieder in den Extraktor 4 gefördert werden. Schließlich gelangt dieser Rückstand - gegebenenfalls nach mehrstufiger Extraktion - als trockner Brennstoff über ein Zwischenlager 12 entweder über eine Brikettiervorrichtung 14 auf ein Endlager 15 oder in den Feuerbereich eines Dampfkessels 16, der sowohl die Prozeßwärme für das vorliegende Verfahren liefert, was etwa 1/3 der gewinnbaren Gesamtwärmeenergie entspricht, als auch mit den restlichen 2/3 für andere Abnehmer, beispielsweise in Form von Fernwärme über einen Wärmeaustauscher 17 zur Verfügung steht.

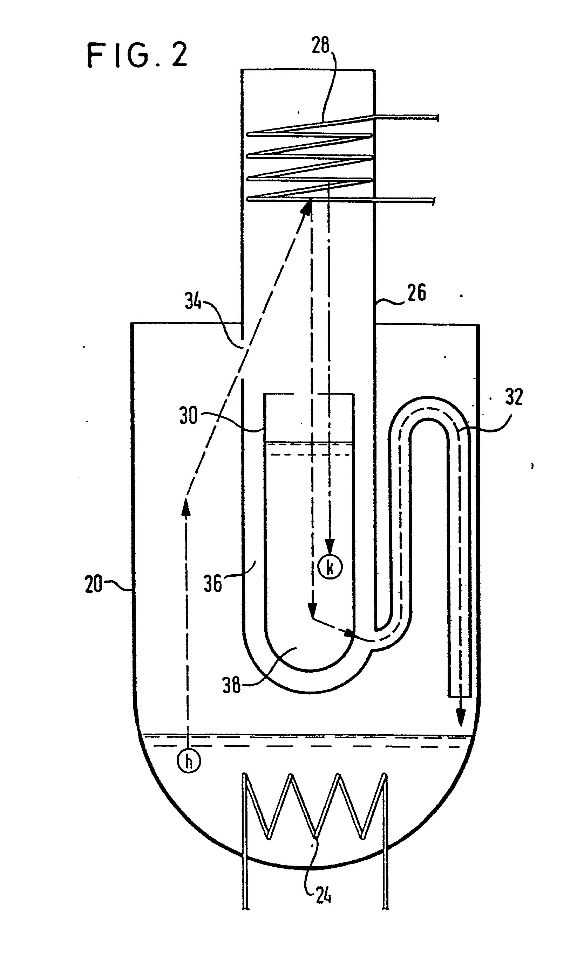

Die in Figur 2 im Schnitt gezeigte Vorrichtung zur Extraktion, die nach dem Prinzip eines Soxhlets arbeitet, besteht aus einem vorzugsweise zylindrischen Gefäß 20, das im unteren Bereiche eine Heizquelle 24 besitzt. In dieses heizbare Gefäß 20 taucht ein Extraktionskolben 26 mit geringerem Durchmesser ein, der im oberen Bereich einen Kühlaufsatz 28 besitzt. Das untere Ende des Kolbens 26, der mit einem Heberohr 32 versehen ist, besitzt einen Extraktionsraum 36, in dem ein weiterer kleinerer poröser Extraktionskolben 30, z. B. in Form einer Papphülse angeordnet ist. Der obere Teil des Gefäßes 20 dient gegenüber dem Extraktionsraum 36 als Heizmantel, in dem das durch die Heizvorrichtung 24 verdampfte heiße Lösungsmittel h aufsteigt, das durch eine Öffnung 34 im Kolben 26 über den Kühler 28 flüssig in den Extraktionsraum 36 gelangt. Das Extraktionsgut wird von dem Extraktionskolben 30 aufgenommen. Fügt man dem Extraktionsraum 36 außer dem Hauptlösungsmittel h ein zweites azeotrop übergehendes Lösungsmittel k zu, das angemessen unterhalb des Siedepunktes von dem Lösungsmittel h siedet, so werden im gleichen Apparat zwei Siedevorgänge, nämlich eine Doppeldestillation erzeugt. Das Lösungsmittel h siedet aus dem Siederaum und steigt dampfförmig und Wärme abgebend an die Außenwand des Gefäßes 20 zum Kühlaufsatz 28. Das Lösungsmittel k siedet aus dem von außen erwärmten Extraktionsraum 36 zum Kühlaufsatz 28 und tropft von dort flüssig in den Extraktionsraum 36 zurück. Hier durchtränken beide Lösungsmittel h und k das Extraktionsgut. Während das Lösungsmittel h infolge des höheren Siedepunktes flüssig durch das Heberohr 32 taktmäßig in den Siederaum des Gefäßes 20 gesaugt wird, siedet das Lösungsmittel k infolge seines niedrigeren Siedepunktes im Extraktionsraum 36. Dessen Dampf leistet laufend eine das pflanzliche Extraktionsgut 38 blähende und aufwirbelnde 'Arbeit. Außerdem findet laufend eine Lösung und Wiederausscheidung derjenigen Stoffe statt, die nicht im Lösungsmittel h aber im Lösungsmittel k löslich sind, was das Extraktionsgut dauernd aktiviert. Nach Ende der Extraktion und Abschalten der Siedewärme ist aus der Extraktion bzw. dem Siederaum auch die Lösung durch das Lösungsmittel k gewinnbar.

Bei einer derartigen Doppeldestillation wird im Vergleich zu herkömmlichen Destillationen einmal die Dauer der erschöpfenden Extraktion um etwa 25 % abgekürzt und zum anderen wird eine wesentlich höhere Ausbeute an Extrakt bei einer darauffolgenden Extraktion erhalten die mit z. B. einem Lösungsmittel gefahren wird, dessen Dielektrizitätskonstante höher ist als die der beiden vorher verwendeten liegt.

Selbstverständlich kann man die Extraktion bei dem erfindungsgemäßen Verfahren auch auf andere Art durchführen, wie beispielsweise Durchfluß der Lösung ohne Heberrohr oder durch einfaches Kochen am Rückfluß, solange die verfahrensgemäßen Bedingungen erfüllt werden, daß ein zugesetztes zweites Lösungsmittel im Extraktionsraum aufschließend wirkt.

Im folgenden wird die Erfindung anhand von Beispielen näher erläutert.


**Beispiel 1**

Gefallene Herbstblätter der Rotbuche wurden gesammelt und lufttrocken so fein zermahlen, daß sich das geschüttete Ausgangsvolumen auf 1/27 verminderte. 34,38 g des zermahlenen Blattgutes wurden 4 Stunden in einem konventionellen 250-ml-Soxhlet erschöpfend extrahiert. Als Lösungsmittel aus der Gruppe A mit ε = 3,4 diente Trichlorethylen. Die gewonnene Extraktlösung wurde mittels eines Rotationsverdampfers eingedampft, wobei eine Ausbeute von 1,98 g = 5,76 % des Ausgangsgewichtes erhalten wurde.

Der gewonnene Extrakt wies ein spezifisches Geruchsaroma in Richtung Patchouli/Eukalyptus auf. Er wurde zur Herstellung eines Duftstoffes in ethylalkoholischer Lösung gleicher Aromanote verwendet.

Der Rückstand nach der Trichlorethylen-Extraktion wurde nach Trocknung in einem 1 Liter-Kolben mit 300 ml Wasser als Lösungsmittel aus der Gruppe B mit ε = 78 versetzt und durch Kochen am Rückfluß 2 Stunden lang extrahiert. Danach wurde die Lösung unter Wasserstrahlvakuum mittels Saugflasche, Büchner-Trichter und Filterpapier abfiltriert, eingeengt und im Trockenschrank bei 105° C getrocknet, wobei die Ausbeute 3,52 g = 10,24 % des Ausgangsgewichtes betrug.

1 g dieses Extraktes wurde in siedendem Wasser gelöst und ergab mit Zucker versetzt ein würzig schmeckendes, dunkelbraunes, nichtalkoholisches Heißgetränk mit einem Kakao/Kaffee ähnlichen Geschmack.

Der Rückstand nach der Wasserextraktion wurde mit 300 ml einer Schwefelsäurelösung mit einem pH-Wert

4

von 1 als Lösungsmittel der Gruppe C mit $\varepsilon > 80$ versetzt und 2 Stunden am Rückfluß kochend extrahiert und wie oben filtriert; hierbei betrug die Ausbeute 6,58 g = 19,14 % des Ausgangsgewichtes. Die schwarzbraune eher pulverige Extraktmasse roch nach Brotkrume.

Der im Trockenschrank bei 105° C getrocknete Rückstand nach der $H_2SO_4$-Extraktion von 20,35 g = 59,19 % des Ausgangsgewichtes wurde mit einer Lösung aus 1 g Extrakt der Schwefelsäureextraktion und 20 ml Wasser gemischt. Es entstand ein knetbarer Brei, der zu Kugeln geformt wurde, die ihre Form nach Lufttrocknung beibehielten und dadurch die Verwendung des Extrakts als Bindemittel auswiesen.

Ferner wurden in Anlehnung an die Immediatanalyse eine überschlägige Schnellbestimmung des Heizwertes des lufttrockenen Gesamtrückstandes durchgeführt:

**Wasser:**

Die Differenz von Einwage: Auswage (Einwage = 15 g) nach 2 Stunden Trocknung im Trockenschrank bei 105° C betrug: 6,5 %.

**Asche:**

1 g Substanz wurde in einem flachen Porzellanschälchen über starker Bunsenflamme unter Luftzutritt 2 Stunden gehalten; Auswage: 1,5 %. Das Material brannte mit matter, langer Flamme.

**Tiegelkoksausbeute, flüchtige Bestandteile:**

1 g Substanz wurde in einem bedeckten Porzellantiegel über starker Bunsenflamme 7 Minuten gehalten; Auswage: 28,5 % = T.

Flüchtige Bestandteile = Fehlbetrag./. Feuchte

```
                        Substanz:  100,00
    ./. Koksausbeute       28,50
                           71,50
    ./. Feuchte             6,50
    Flüchtige
    Bestandteile        = 65,00 %
```

**Heizwert:**

Der nach der Harpener Formel:
$H = 3664 + 112,1\,T - 0,6574\,T^2$ berechnete Heizwert betrug 26477 kJ/kg.
Die zusammenfassende Stoffbilanz dieser 3-stufigen Extraktion war wie folgt:

```
Ausgangsgewicht                     34,38 g = 100,00 %

Trichlorethylen-Extrakt    1,98 g =  5,76 %

Wasser-Extrakt             3,52 g = 10,24 %

H2SO4-Extrakt              6,58 g = 19,14 %

Gesamtextrakt             12,08 g = 35,14 %

Rückstand                 20,35 g = 59,19 %

                                    32,43 g = 94,33 %

Experimentelle Verluste              1,95 g =  5,67 %
```

5

# 0 111 732

## Beispiel 2

Gefallene Herbstblätter der Walnuß wurden analog Beispiel 1 behandelt, wobei die 3. Extraktionsstufe anstelle von Schwefelsäure mit einer KOH-Lösung ($\epsilon > 80$) bei einem pH-Wert von 8 durchgeführt wurde. Insgesamt wurden folgende Ergebnisse erhalten:

| | | |
|---|---|---|
| Ausgangsgewicht | | 48,84 g = 100,00 % |
| Trichlorethylen-Extrakt | 2,62 g = 5,72 % | |
| Wasser-Extrakt | 6,97 g = 15,21 % | |
| KOH-Extrakt | 6,02 g = 13,13 % | |
| Gesamtextrakt | 15,61 g = 34,06 % | |
| Rückstand | 28,85 g = 62,94 % | |
| | | 44,46 g = 97,00 % |
| Experimentelle Verluste | | 1,38 g = 3,00 % |

Der analog Beispiel 1 durch Immediatanalyse ermittelte Heizwert lag in einer Größenordnung von etwa 25116 kJ /kg.

## Schwefel:

Der trockene Gesamtrückstand wurde einer qualitativen Hepar-Probe unterworfen, es wurde kein Schwefel nachgewiesen.

Der Trichlorethylen-Extrakt wies ein spezifisches Geruchsaroma in Richtung Majoran/Rosmarin auf und wurde wie folgt verwendet, um einen Hautcreme herzustellen.

In eine 75° C warme Ölphase aus 10,8 % Stearinsäure und 5,4 % Glycerinmonostearat wurden 5,4 % Glycerin und 0,4 % Triethanolamin und 0,3 % 50 %ige NaOH und 69,0 % Wasser bei 75° C einemulgiert. Das Gemisch wurde kalt gerührt und bei 40° C mit 8 % einer 25 %igen Walnuß-Extrakt-Lösung in Ethanol versetzt.

Es entstand eine durch Reiben leicht in die Haut gehende Creme der oben genannten Duftnote. Überraschenderweise hatte diese Creme bei wiederholter Anwendung die Eigenschaft, Leberflecken aufzuhellen, so daß angenommen werden muß, daß der Walnuß-extrakt auf diese Weise pharmakologisch wirkt.

15 g des Gesamtrückstandes wurden 90 Minuten lang bei 140° C im Trockenschrank gehalten. Eine erneute Trichlorethylen-Extraktion daraus ergab eine nochmalige Ausbeute von 0,18 g = 1,2 % = 21 % des ersten Trichlorethylen-Extraktes.

## Beispiel 3

Analog Beispiel 1 wurden gefallene Herbstblätter der Roßkastanie mit folgenden Lösungsmitteln hintereinander behandelt: 1 Stufe: ein unter dem Warenzeichen "Kaltron" der Kali-Chemie Hannover bekanntes Fluor-KW Gemisch mit $\epsilon < 30$, Kp: = 47,7° C im Soxhlet, 2. Stufe: Methanol ($\epsilon = 32\,6$) im Soxhlet, 3. Stufe: Wasser, Kochen am Rückfluß. Die Ergebnisse waren:

| | |
|---|---|
| Ausgangsgewicht | 26,48 g = 100,00 % |
| Kaltron-Extrakt | 1,12 g = 4,57 % |
| Methanol-Extrakt | 3,27 g = 12,35 % |
| Wasser-Extrakt | 4,21 g = 15,90 % |

Der Kaltron-Extrakt wurde zur Herstellung eines Holzpflegemittels verwendet, indem dieser in einem kleinen Erlenmeyerkolben auf dem Wasserbad erhitzt und teilweise aufgeschmolzen wurde. Dieses Produkt wurde unter Umrühren in ein kleines Becherglas mit 3 ml Terpentinöl gegossen. Nach einigen Stunden entstand eine dunkle, schmalzartige Masse, die nach Verreiben auf Holz Glanz erzeugte, wasserabweisend war und angenehm roch.

Die dreistufige Extraktion der Kastanienblätter wurde wiederholt, diesmal jedoch in folgender Reihenfolge: 1. Stufe: Methanol im Soxhlet, 2. Stufe: Kaltron im Soxhlet, 3. Stufe: Wasser, Kochen am Rückfluß. Das Ergebnis war:

| | | |
|---|---:|---:|
| Ausgangsgewicht | 32,33 g = | 100,00 % |
| Methanol-Extrakt | 6,00 g = | 18,56 % |
| Kaltron-Extrakt | 0,93 g = | 2,88 % |
| Wasser-Extrakt | 2,08 g = | 6,43 % |

Es zeigte sich, daß die Lösungsmittel überlappend extraktiv wirken, und daß ein Lösungsmittel mit mäßiger Polarität, in diesem Falle Methanol mit $\varepsilon = 32,63$ sowohl aus dem unpolaren wie aus dem polaren Lösungsbereich Stoffgruppen summiert extrahiert.

Die Methanol- und Kaltronextrakte wiesen ein spezifisches Geruchsaroma in Richtung Jasmin/Ysop auf.

Der durch Immediatanalyse ermittelte Heizwert des Rückstandes der wiederholten Extraktion der Kastanienblätter lag mit rund 2302 kJ /kg deutlich unter dem im Beispiel 1 ermittelten Wert, was besagt, daß das Belassen von Extraktteilen im Rückstand dessen Heizwert mindert.

**Beispiel 4**

A. Gefallene Herbstblätter der Linde wurden analog Beispiel 1 jedoch im Soxhlet mit Heizmantel statt Dampfrohr extrahiert, wobei das Ende der erschöpfenden Extraktion deutlich an einer Entfärbung der Lösung im Extraktionsraum zu erkennen war. Ergebnis:

| | | |
|---|---:|---:|
| Ausgangsgewicht | 27,80 g = | 100,00 % |
| Kaltron-Extrakt | 0,82 g = | 2,95 % |
| Methanol-Extrakt | 3,03 g = | 10,90 % |
| | Dauer: 4 Stunden | |
| Wasser-Extrakt | 1,99 g = | 7,16 % |

B. Bei einer Wiederholung von Versuch A mit 40 ml Kaltron im Extraktionsraum während der Methanolextraktion wurde folgendes Ergebnis erhalten:

| | | |
|---|---:|---:|
| Ausgangsgewicht | 22,80 g = | 100,00 % |
| Kaltron-Extrakt | 0,66 g = | 2,90 % |
| Methanol + Kaltron-Extrakt | 2,42 g = | 10,61 % |
| | Dauer: 3 Stunden | |
| Wasser-Extrakt | 2,66 g = | 11,67 % |

Ein Vergleich von Versuch A mit Versuch B zeigt, daß die erschöpfenden Methanol + Kaltron Extraktion bereits nach einer um 25 % verkürzten Zeitdauer erreicht wurde, und daß bei sehr guter Übereinstimmung der Extraktgewichte der Stufen 1 und 2 eine um 63 % höhere Ausbeute der Wasser-Extraktion erzielt wurde, was der aufschließenden Wirkung des Kaltron-Zusatzes zum Methanol bei der vorangegangenen Extraktion zugesprochen werden muß.

Die Kaltron- und Methanol-Extrakte wiesen ein spezifisches Geruchsaroma in Richtung Melisse/Heu auf.

4 g des Wasserextraktes wurden in 50 ml Wasser heiß gelöst und in eine Petrischale gegeben, die offen der Luft ausgesetzt war. Die dunkle Lösung trocknete alsbald zu einem zähen Brei ein, auf dem sich Keime von Pilzen und Bakterien niederließen und innerhalb von wenigen Wochen zu Riesenkolonien entwickelten. Dies belegt die Verwendung des Extrakts als Nähr- und Futtermittel.

**Beispiel 5**

Gefallene Herbstblätter des Ahorns wurden analog Beispiel 4 behandelt jedoch wurde die Wasserextraktion nicht durch Kochen am Rückfluß sondern durch Erhitzen mit Wasser bei 50° C unter Magnetrührung in einem offenen Becherglas vorgenommen. Die dabei verkleistert gewonnene Stärke zeigte sich durch die dickflüssige Konsistenz der Lösung. Die Abtrennung dieser Lösung geschah anstelle des Filtrierens durch Abpressen mit einem Leinentuch.

Analog zu Versuch A wurde als Ergebnis erhalten:

| | | |
|---|---|---|
| Ausgangsgewicht | 27,98 g = | 100,00 % |
| Kaltron-Extrakt | 1,32 g = | . 4,72 % |
| Methanol-Extrakt | 2,95 g = | 10,54 % |
| Wasser-Extrakt | 2,56 g = | 9,12 % |

Analog zu Versuch B wurde als Ergebnis erhalten:

| | | |
|---|---|---|
| Ausgangsgewicht | 23,93 g = | 100,00 % |
| Kaltron-Extrakt | 1,10 g = | 4,60 % |
| Methanol + Kaltron-Extrakt | 2,47 g = | 10,32 % |
| Wasser-Extrakt | 3,98 g = | 16,63 % |

Die beiden Ergebnisse bestätigen deutlich die aufschliessende Wirkung auf die Blattsubstanz durch den Kaltronzusatz zu Methanol bei der nachfolgenden Wasserextraktion. Hier betrug die Erhöhung der Ausbeute sogar 82,3 % bei sehr guter Übereinstimmung der Extraktgewichte der Stufen 1 und 2.

Die Kaltron- und Methanolextrakte wiesen ein spezifisches Geruchsaroma in Richtung Rosmarin/Orange auf. 2 g des Kaltronextraktes wurden weiter verwendet und zwar durch Schmelzen bei 80°C im Trockenschrank, Eingießen in eine kleine Leichtmetallform und Einsetzen eines Dochtes eine Wachskerze in Form eines Hindenburg-Lichtes beim Anzünden außer der Kerzenflamme gleichzeitig einen angenehmen Duft erzeugte, was zeigte, daß auch die Verbrennungsprodukte der gewonnenen Aromen durch menschliche Sinnesorgane merklich angenehm wahrgenommen werden.

Unter kräftiger Magnetrührung wurden 5,4 g des trockenen Wasserextraktes in einem 250 ml Erlenmeyerkolben mit 100 ml siedenden Wassers übergossen. Zu der so entstandenen sämigen Lösung wurden bei 50° C etwa 30 ml eines abfiltrierten heißen Wasserauszuges aus 15 g zerschrotetem Darrmalz in 100 ml Wasser gegeben. Bei etwa 50° C wurde 1 Stunde lang weiter gerührt. Nach Abkühlen auf 30° C wurden der Lösung 3 g mit Wasser angeteigter Backhefe zugesetzt, und der Kolben mit einem Gäraufsatz versehen. Die Vergärung bei etwa 25° C etwa 4 Tage. Die vergorene Lösung wurde dekantierend über ein Faltenfilter filtriert und ergab, abgekühlt, ein braunes, wohlschmeckendes alkoholisches Kaltgetränk.

**Beispiel 6**

Es wurde eine einstufige Methanolextraktion an gefallenen Herbstblättern von Birnbäumen durchgeführt, wobei der Rückstand erwärmt und nochmals extrahiert und dieser Schritt mehrmals durchgeführt wurde.

Im einzelnen wurden 48,62 g Blattmaterial in einer Soxhlet-Apparatur mit Methanol extrahiert. Der erhaltene Rückstand wurde 100 Minuten bei 150 °C im Trockenschrank gehalten, und erneut mit Methanol wiederum im Soxhlet extrahiert. Der hierbei erhaltene Rückstand wurde nochmals 100 Minuten bei 150°C im Trockenschrank gehalten und wiederum wie vorher extrahiert.

Die Extraktionsausbeuten waren die folgenden:

1. Bei der ersten Extraktion 14,17 g = 29,14 %
2. bei der zweiten Extraktion 1,75 = 3,60 % nach Erwärmung (12,34 % der 1. Stufe)
3. bei der dritte Extraktion 1,09 g = 2,24 % nach Erwärmung (7,69 % der 1. Stufe)

Dieser Versuch zeigt, daß eine erste Wärmebehandlung des Rückstandes nach der ersten Extraktion eine Ausbeutenachlieferung von rund 12 % ermöglicht und daß eine zweite Wärmebehandlung dieses weiteren Rückstandes nach der zweiten Extraktion nochmal eine Ausbeutenachlieferung von etwa 7 % ergibt, von einer Gesamtausbeutenachlieferung von etwa 20 % entspricht.

Zum Vergleich wurden 31 g der gleichen Blätter vor der Extraktion 100 Minuten bei 150° C im Trockenschrank gehalten und danach extrahiert. Hierbei wurden 9,23 g = 29,77 % erhalten. Dieser Vergleichsversuch zeigt, daß eine Wärmebehandlung vor der Extraktion gegenüber der ersten Extraktion ohne Wärmebehandlung nur eine äußerst geringe Ausbeuteerhöhung von etwa 2 % ergibt.

In allen Fällen zeigte der Methanolextrakt der Blätter ein spezifisches Geruchsaroma in Richtung Jasmin/Weihrauch.

**Beispiel 7**

Es wurde eine Mehrfachextraktion an gefallenen Herbstblättern des Trompetenbaums durchgeführt, dessen Blätter relativ inhaltsreich sind. Als Extraktionsmittel wurde Aceton/Methanol/Wasser verwendet.

Im einzelnen wurden 32,35 g Blattmaterial erst mit Aceton ($\varepsilon$ = 20,7) im Soxhlet extrahiert, anschließend mit Methanol extrahiert und danach bei 60° C unter Magnetrührung mit Wasser extrahiert. Der Rückstand dieser Extraktionsstufe wurde 100 Minuten bei 150 °C im Trockenschrank gehalten und danach wie vorher extrahiert.

Zum Vergleich wurden 31,24 g des gleichen Blattmaterials vor der Extraktion 100 Minuten bei 150° C im Trockenschrank gehalten und danach wie oben extrahiert.

Die Extraktionsausbeuten sind in der folgenden Tabelle II aufgeführt:

**Tabelle II**

|  | 1. Extraktion | 2. Extraktion nach Erwärmen | | Vergleich |
|---|---|---|---|---|
| Aceton | 4,26 g = 13,17 % | 0,13 g = 0,40 % | ( 3,04 % der Ausbeute von 1) | 2,25 % = 7,20 % |
| Methanol | 5,31 g = 16,41 % | 0,35 g = 1,08 % | ( 6,58 % der Ausbeute von 1) | 5,45 g = 17,45 % |
| Wasser | 1,96 g = 6,06 % | 0,71 g = 2,19 % | (36,14 % der Ausbeute von 1) | 1,83 g = 5,86 % |
| Summe | 35,64 % | 3,67 % | (10,29 % der Ausbeute von 1) | 30,51 % |

Diese Versuche zeigen, daß die Menge der Nachlieferung durch Wärmebehandlung nach der 1. Extraktion stark von der Polarität der Extraktionsmittel abhängt, und zwar im vorliegenden Falle bei Aceton:Methanol:Wasser im Verhältnis von 1:2:12.

Die Gesamtnachlieferung lag etwa 10 % unter den Werten des Beispiels 6, was sich durch das hohe Inhaltsniveau der Blätter des Trompetenbaums erklärt. Ferner zeigen die Versuche, daß durch die Wärmebehandlung insbesondere wasserlösliche polare Inhaltsstoffe nachgeliefert wurden.

Bei dem Vergleichsversuch, bei dem die Wärmebehandlung vor der Extraktion durchgeführt wurde, zeigt, daß die Gesamtausbeute nur etwa 85 % der Ausbeute beträgt, die durch Wärmebehandlung nach erster Extraktion erzielt worden war. Dieses beruht vermutlich darauf, daß durch die Wärmebehandlung die leichter flüchtigen unpolaren Bestandteile des Blattgutes weitgehend verlorengehen und die Gesamtausbeute erheblich verringern; dieses ist abhängig vom Gesamtinhalt des Blattes an insbesondere flüchtigen Bestandteilen.

Die erhaltenen Aceton- und Methanolextrakte von Blättern des Trompetenbaumes wiesen ein spezifisches Geruchsaroma in Richtung Fenchel/Ysop auf.

**Beispiel 8**

Um den Einfluß der Höhe der Temperatur und der Zeitdauer der Wärmebehandlung auf die Menge der Nachlieferung zu klären, wurden gefallene Blätter des Apfelbaumes analog Beispiel 7 mit Aceton/Methanol/Wasser extrahiert.

In der folgenden Tabelle sind die Ausbeuten der folgenden Verfahrensschritte angegeben.

**Versuch A:**

31,9 g Blattgut wurde mit Aceton im Soxhlet und danach mit Methanol ebenfalls im Soxhlet und danach bei 60° C unter Magnetrührung mit Wasser extrahiert.

**Versuch B:**

Der Rückstand von Versuch A wurde 50 Minuten bei 90° C im Trockenschrank gehalten, und danach wie bei Versuch A extrahiert.

**Versuch C:**

30,56 g Blattmaterial wurden vor der Extraktion 50 Minuten bei 90° C im Trockenschrank gehalten, und danach wie bei Versuch A extrahiert.

Die Extraktausbeuten sind in der folgenden Tabelle III aufgeführt:

**Tabelle III**

| | A | B | C |
|---|---|---|---|
| Aceton | 6,27 g = 20,17 % | 0,06 g = 0,19 % = 0,94 % der Ausbeute von A | 5,71 g = 18,69 % |
| Methanol | 3,36 g = 10,81 % | 0,10 g = 0,32 % = 2,96 % der Ausbeute von A | 3,05 g = 9,98 % |
| Wasser | 1,80 g = 5,79 % | 0,52 g = 1,67 % = 28,84 % der Ausbeute von A | 2,01 g = 6,58 % |
| Summe | 36,77 % | 2,18 % = 5,93 % der Ausbeute von A | 35,25 % |

Diese Ergebnisse zeigen, daß die Menge der Nachlieferung durch Wärmebehandlung nach erster Extraktion stark von der Temperatur und der Zeitdauer der Wärmebehandlung abhängt, und zwar sinkt die Ausbeute mit geringerer Temperatur und geringerer Dauer, wie ein Vergleich der Versuchsreihe B gegenüber den entsprechenden Werten aus Beispiel 7 zeigt. Bei 90° C und 50 Minuten wurden mit 5,93 % der Ausbeute von Versuch A etwa nur die Hälfte der Ausbeute erzielt, die in dem entsprechenden Fall in Beispiel 7 erhalten wurde, wenngleich das Blattmaterial in beiden Fällen sehr inhaltsreich war.

Die Abhängigkeit der Ausbeute von der Polarität der Lösungsmittel entspricht den Werten gemäß Beispiel 7, nämlich einem Verhältnis von 1:1,7:8,8.

Die Werte von Versuch C zeigen, daß die Nachlieferung durch Wärmebehandlung vor der Extraktion unter den relative milden Bedingungen zwar einen ungleich geringeren Verlust an flüchtigen unpolaren Bestandteilen und sogar einen Gewinn an polaren Bestandteilen zur Folge hat, daß aber die Gesamtausbeute nicht verbessert werden kann, sondern nur etwa 95 % der Ausbeute des Versuches A beträgt.

Das Geruchsaroma des bei diesen Versuchen erhaltenen Aceton- und Methanolextraktes lag in Richtung Kamille/Sandelholz.

Allgemein wurde festgestellt, daß eine Nachlieferung a Ausbeute im wesentlichen vorteilhaft nur durch ein Wärmebehandlung nach erster Extraktion zustande kommt während bei einer Wärmebehandlung vor der Extraktion die flüchtigen unpolaren Bestandteile verlorengehen un auch bei besonders milden Bedingungen derartige Verluste nicht zu vermeiden sind. Im Hinblick auf die starke Temperatur- und Zeitabhängigkeit der Nachlieferung durch Wärmebehandlung vor Extraktion sollte die Wärmebehandlung nicht unter 70° C und nicht kürzer als etwa 20 Minuten erfolgen.

**Beispiel 9**

Zerkleinerte Herbstblätter des Ahorns, wie sie im Beispiel 5 eingesetzt wurden, wurden mit Wasser versetzt, das sich in einem zu etwa 1/3 gefüllten Destillierkolben befand. Dieser wurde über eine eingehende Verbindung mit einem Dampfentwicklungskolben und über eine ausgehende Verbindung und einen Kühler mit einer Vorlage verbunden, an die ein Vakuum angelegt wurde. Der Dampfentwicklungskolben wurde auf 40°C, der Destillierkolben auf 35°C erwärmt. Bei 4,0 kPa (30 mm Hg-Druck) destillierten mit dem Wasserdampf Inhaltsstoffe des Ahorns als trüb-ölige Substanz in die Vorlage, während sich andere Inhaltsstoffe des Ahorns im Wasser des Destillierkolbens lösten, das sich dadurch bräunlich färbte. Der Inhalt der Vorlage wurde mit Chloroform ausgeschüttelt, vom Wasser getrennt, mit $CaCl_2$ getrocknet, und das Chloroform abdestilliert. Die verbleibende pastenartige Substanz wies ein Geruchsaroma auf, das mit den Kaltron- und Methanolextrakten aus Beispiel 5 vergleichbar, jedoch wesentlich intensiver war.

Dieses Beispiel zeigt, daß man die mehrstufige Extraktion mit mehreren Lösungsmitteln auch durch Wasserdampfdestillation, insbesondere unter Vakuum durchführen kann. Das mit zerkleinertem Blattmaterial versetzte Lösungsmittel der zweiten Lösungsmittelgruppe ($\varepsilon$ = 30-80 = Wasser) - löst einerseits in der ersten Stufe die bei der angewendeten Temperatur darin in Lösung gehenden Inhaltstoffe und treibt andererseits andere Inhaltsstoffe mit seinem Dampf über einen Kühler in eine Vorlage, deren Inhalt in der zweiten Stufe von einem anderen die übergegangenen Inhaltstoffe lösenden Lösungsmittel, z.B. $\varepsilon$ <30, aufgenommen wird. Die Lösung wird von übergegangenen Wasser abgetrennt. Durch Abdestillieren des zweiten Lösungsmittels werden die mit dem Wasserdampf übergegangenen Inhaltstoffe gewonnen.

## Patentansprüche

1. Verfahren zur Gewinnung von Rohstoffen aus pflanzlichen Feststoffen durch ein- oder mehrstufige Extraktion mit einem oder mehreren Lösungsmitteln und Isolierung der Extrakte und des Rückstandes, dadurch gekennzeichnet, daß man als pflanzliche Feststoffe zerkleinertes Herbstlaub und als Lösungsmittel solche mit einer Dielektrizitätskonstante $\varepsilon$ < 30 (Lösungsmittelgruppe A) bzw. mit $\varepsilon$ = 30 bis 80 (Lösungsmittelgruppe B) bzw. mit $\varepsilon$ > 80 (Lösungsmittelgruppe C) einsetzt.

2. Verfahren nach Anspruch 1, dadurch gekennzeichnet, daß man den Extraktionsrückstand ein oder mehrmals auf Temperaturen von 80 bis 240°C erhitzt und nach jeder Erwärmung jeweils mit gleichen oder verschiedenen Lösungsmitteln oder Lösungsmittelgruppen extrahiert.

3. Verfahren nach Anspruch 1, dadurch gekennzeichnet, daß man als Lösungsmittel Wasser verwendet und die mittels Wasserdampfdestillation erhaltenen Anteile ebenfalls extrahiert oder isoliert.

4. Verwendung der nach dem Verfahren gemäß Anspruch 1 bis 3 mit den Lösungsmitteln der Gruppe A erhaltenen Extrakte als Geruch- oder Geschmacksstoffe oder Kosmetika und zur Herstellung eines Arzneimittels, oder eines Pflegemittels.

5. Verwendung der nach dem Verfahren gemäß Anspruch 1 bis 3 mit den Lösungsmitteln der Gruppe B erhaltenen Extrakte zur Herstellung von Röstgetränken, Nähr- oder Futtermittel, Gerbmittel, Düngemittel, Farben, Kleber.

6. Verwendung der nach dem Verfahren gemäß Anspruch 1 bis 3 mit den Lösungsmitteln der Gruppe C erhaltenen Extrakte zur Herstellung von Gelier-, Binde- oder Füllmittel.

7. Vorrichtung zur Durchführung des Verfahrens nach Anspruch 1 und 2 bei Verwendung von zwei verschieden hochsiedenden Lösungsmitteln bzw. Lösungsmittelgruppen mit einem heizbaren Gefäß und einem in diesem befindlichen Extraktionskolben mit aufgesetztem Kühler, dadurch gekennzeichnet, daß in dem unterem Bereich des Extraktionskolbens (26) ein umgekehrt U-förmiges und unterhalb des Extraktionskolbens in das heizbare Gefäß (20) mündendes Heberohr (32) vorgesehen ist und daß sich in dem Extraktionskolben (26) ein weiterer kleiner poröser Extraktionskolben (30) befindet und daß im Kolben (26) eine Öffnung (34) für den Durchtritt verdampften Lösungsmittels zum Kühler (28) vorgesehen ist.

## Claims

1. Process for obtaining raw materials from solid vegetable materials by one - or multi-step extraction with one or more solvents and isolating of the extracts and the residue characte    d in that comminuted autumn foliage is used as solid vegetable materials and that as solvent those with    dielectric constant of $\varepsilon$ = <30 (solvent group A), or $\varepsilon$ = 30-80 (solvent group B), or $\varepsilon$ = > 80 (solvent group (    spectively are used.

2. Process according to claim 1 characterized in that the extraction residue is heated one or more times to temperatures of 80 to 240°C and, after each heating operation, is extracted with the same or different solvents or solvent groups.

3. Method according to claim 1 characterized in that water is used as solvent and the portions obtained by water steam distillation are also extracted or isolated.

4. Use of the extract obtained by the method according to claims 1 to 3 with the solvents of group A as aroma or flavouring agents or cosmetics and for the preparation of a pharmaceutical or of a treatment composition.

5. Use of the extracts obtained by the method according to claims 1 to 3 with solvents of group B for producing roast beverages, feeds or foods, tanning agents, fertilizers, inks and adhesives.

6. Use of the extracts obtained by the method according to claims 1 to 3 with solvents of group C for producing gelling, binding or filling agents.

7. Apparatus for performing the process according to claims 1 and 2 when using two different high-boiling solvents or solvent groups, having a heatable vessel and an extraction flask, installed therein and with a fitted cooling device, characterized in that the lower region of the extraction flask (26) contains an inverted U-shaped siphon (32) issuing into the heatable vessel (20) below the extraction flask and that the extraction flask (26) contains a further small, porous extraction flask (30), and that there is provided in the flask (26) an opening (34) for the passage of evaporated solvent to the cooling device (28).

**0 111 732**

### Revendications

1.- Procédé d'obtention de matières premières à partir de substances végétales solides par extraction en une ou plusieurs étapes à l'aide d'un ou de plusieurs solvants et de séparation des extraits et des résidus, caractérisé en ce qu'on utilise comme substances végétales solides des feuilles d'automne broyées et qu'on utilise comme solvants ceux qui présentent une constante diélectrique $\varepsilon < 30$ (Catégorie de solvants A) et/ou $\varepsilon = 30$ à 80 (Catégorie de solvants B) et/ou $\varepsilon > 80$ (Catégorie de solvants C).

2.- Procédé selon la revendication 1, caractérisé en ce qu'on réchauffe le résidu d'extraction une ou plusieurs fois à des tempèratures de 80-240°C et en ce qu'on procède à une extraction après chaque réchauffage en utilisant des solvants ou catégories de solvants identiques ou différents.

3.- Procédé selon la revendication 1, caractérisé en ce qu'on utilise comme solvant de l'eau et en ce qu'on extrait ou sépare par distillation à la vapeur d'eau les constituants obtenus.

4.- Utilisation des extraits obtenus par le procédé selon les revendications 1 à 3 lors de l'utilisation de solvants de la Catégorie A, en tant que substances odorantes ou aromatiques ou cosmétiques, et pour la fabrication d'un produit pharmaceutique ou d'un produit d'entretien.

5.- Utilisation des extraits obtenus par le procédé selon les revendications 1 à 3 lors de l'utilisation de solvants de la Catégorie B, pour la fabrication de boissons à infusion de produits grillés, aliment ou de fourrage, de produits de tannage, d engrais, de produits colorants d'adhésifs.

6.- Utilisation des extraits obtenus par le procédé selon les revendications 1 à 3 lors de l'utilisation de solvants de la Catégorie C, pour la fabrication de produits de gélation, de liants ou de matériaux de remplissage.

7.- Dispositif pour la mise en oeuvre du procédé selon les revendications 1 et 2, utilisant deux solvants différents ou deux catégories différentes de solvants à point d'ébullition élevé, dispositif qui comporte un récipient chauffant et un récipient plongeant d'extraction disposé dans ce dernier et pourvu d'un refroidisseur superposé, caractérisé en ce qu'une conduite montante (32) en U renversé et débouchant dans le récipient chauffant (20) du-dessous dudit récipient d'extraction est disposée dans la zone inférieure du récipient d'éxtraction (26), et en ce que le récipient d'extraction (26) renferme un autre récipient d'extraction (30) poreux et de dimensions plus faibles, et en ce que le récipient d'extraction précité (26) présente une ouverture (34) pour le passage du solvant vaporisé vers le refroidisseur (28).

12

# FIG. 1

Prozesswärme

Brüden

Fernwärme

Dampf

Wasser

Abgas

0 111 732

FIG. 2